# EUROPEAN PATENT SPECIFICATION

(11) **EP 2 295 277 B1**
(45) Date of publication and mention of the grant of the patent: **22.08.2012**
(21) Application number: 10174328.4
(22) Date of filing: 27.08.2010
(51) Int. Cl.: B60K 37/06, G01C 21/36, G06F 3/01, G06F 3/00

(54) **Vehicle operator control input assistance**
Fahrzeugbedienersteuerungseingabehilfe
Assistance d'entrée de contrôle d'opérateur de véhicule

(30) Priority: 15.09.2009 US 559999
(43) Date of publication of application: 16.03.2011
(73) Proprietor: Delphi Technologies, Inc., Troy, MI 48007 (US)
(72) Inventor: Tieman, Craig A., Westfield, IN 46074 (US)
(74) Representative: Denton, Michael John

(56) References cited:
- DE-A1-102005 056 458
- DE-A1-102008 000 192

## Description

### TECHNICAL FIELD

The invention relates to assisting a vehicle operator with locating a control input of a vehicle device so as to minimize operator distraction when operating the vehicle device. The invention processes the output from a camera that has a first perspective view of the control input to display a second perspective view of the control input that is dependent on the operator's hand position relative to the control input. Specifically, the invention displays a second perspective view corresponding to that of a virtual camera attached to the operator's forearm or wrist.

### BACKGROUND OF INVENTION

Vehicles of many types are equipped with various control inputs for controlling devices on the vehicle. Examples of such devices in automobiles are a traction control system, a heating / ventilation / air conditioning (HVAC) system, an entertainment device, and a navigation assistance device. It is desirable to position these various control inputs in a vehicle such that the vehicle operator can locate the control input without unduly distracting the operator. With regard to operating an automobile for example, it is desirable that the attention of an automobile operator be directed to the roadway being traveled, and not be distracted to operate a device. Safety studies have suggested that arranging for the operator to focus attention within a 20 degree cone related to the driver's forward gaze improves safety. However, as the number and complexity of various devices controlled by the operator increases, combined with the trend towards multi-mode soft buttons or touch sensitive screens coupled to reconfigurable displays, providing control inputs that do not unduly distracted the operator becomes more difficult. Furthermore, it is particularly desirable to minimize operator distraction when environmental conditions require extra attention on the part of an operator such as when it is raining or it is nighttime. What is needed is a way to assist the operator with locating control inputs on the vehicle that minimizes operator distraction. DE-A-10 2005 056 458 and DE-A-10 2008 000 192 disclose a system in accordance with the preamble of claims 1 and 4.

### SUMMARY OF THE INVENTION

Described herein is a vehicle operating system comprising a device in a vehicle having a control input for an operator to control the device, a camera arranged to have a first perspective view of the control input and configured to output a camera signal corresponding to the first perspective view, a display arranged to be readily observed by the operator, and a processor configured to receive the camera signal, determine a hand position of a hand approaching the control input based on the camera signal, and output a processed camera signal to the display for assisting the operator with locating the control input, wherein said processed camera signal provides a second perspective view corresponding to a virtual camera arranged to have a view that is substantially fixed relative to the hand.

Also described herein is a method of operating a vehicle comprising a device in the vehicle having a control input for an operator to control the device, said method comprising the steps of receiving a camera signal having a first perspective view of the control input, determining a hand position of a hand approaching the control input based on the camera signal, generating a processed camera signal having a second perspective view that is substantially fixed relative to the hand, and displaying a processed camera signal to assist the operator with locating the control input.

Further features and advantages of the invention will appear more clearly on a reading of the following detail description of the preferred embodiment of the invention, which is given by way of non-limiting example only and with reference to the accompanying drawings.

### BRIEF DESCRIPTION OF DRAWINGS

This invention will be further described with reference to the accompanying drawings in which:

Fig. 1 is cut-away view of an automobile interior;

Fig. 2 is a perspective view of the automobile interior in Fig. 1;

Fig. 3 is an operator view of the automobile interior in Fig. 1;

Fig. 4 is an operator view of the automobile interior in Fig. 1;

Fig. 5 is an operator view of the automobile interior in Fig. 1; and

Fig. 6 is a flow chart of a method of operating the automobile in Fig. 1.

### DETAILED DESCRIPTION OF INVENTION

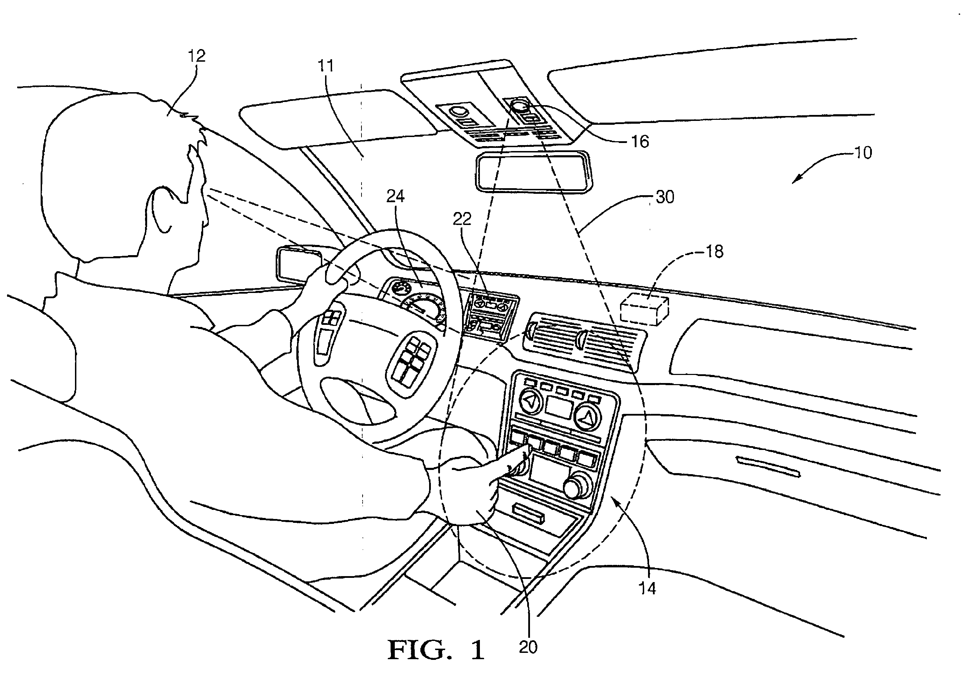

Described herein is a system and method for operating a vehicle that assists a vehicle operator with locating a control input for operating or controlling a device. A preferred embodiment of the invention is directed to an automobile, but the vehicle could alternately be an airplane, a construction machine such as a crane, or a military vehicle such as a tank. In accordance with a preferred embodiment of this invention, Fig. 1 is an illustration of an automobile interior 10. An operator 12 residing within interior 10 operates various devices by manipulating device control inputs 14 as part of operating the automobile. Examples of the various devices include a heating / ventilation / air-conditioning (HCAV) system, a selectable traction control system, an entertainment center, and a navigation assistance or GPS device. Control inputs 14 for these various devices may be push-button switches, toggle switches, slide switches, multiposition rotary knobs or sliders, or a reconfigurable display with either reassignable buttons surrounding the display or a touch sensitive screen overlaying the display.

The system has the ability to detect that a hand 20 is approaching or near control inputs 14. Proximity sensing techniques include infrared, capacitive, and ultrasonic. The system preferably includes a camera 16 fixedly mounted at a location suitable to observe an area of automobile interior 10 having control inputs 14, and thereby optically detect the proximity of hand 20. Using camera 16 to detect the proximity of hand 20 provides a means to economically detect the proximity of hand 20 over a wide area when compared to other proximity sensing methods. If the vehicle is equipped with steering wheel mounted switches, it may be preferable to use different short range proximity detection means such as infrared, capacitive, or ultrasonic instead of a second camera positioned to have a view of the steering wheel. Depending on the arrangement of control inputs 14, it may be necessary to use more than one camera to be able to view all of the control inputs. Camera 16 is arranged within interior 10 at a position and orientation that provides camera 16 with a first perspective view of control inputs 14. An exemplary first perspective view for camera 16 is indicated by dashed line 30. Camera 16 provides an image of control inputs 14 by outputting a camera signal that corresponds to the first perspective view. Camera 16 outputs the camera signal to a processor 18 that is configured to receive the camera signal and shown as being located out of view in the vehicle interior 10. The camera signal can be communicated from camera 16 to processor 18 using a metallic wire conductor, a fiber-optic conductor, or by a wireless method such as Blue-Tooth. The specific means used to communicate the camera signal to processor 18 is not shown. Alternately, processor 18 and camera 16 could be a single assembly located where camera 16 is shown.

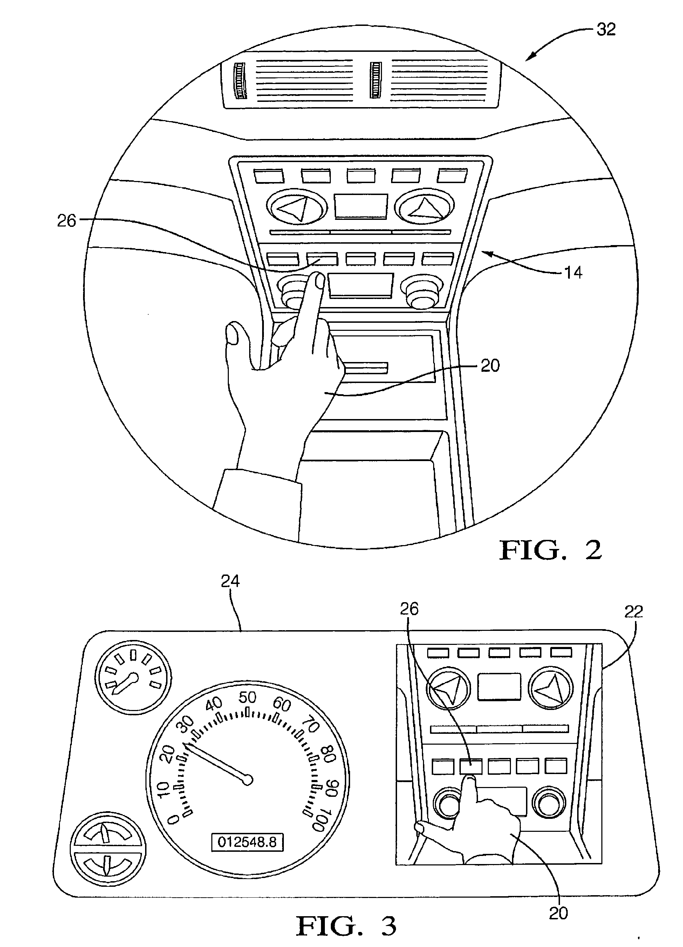

Fig. 2 is an example of an image 32 taken by camera 16 of a hand 20 approaching control inputs 14 that corresponds to the first perspective view. Processor 18 analyzes the camera signal to determine if a hand 20 is approaching any of control inputs 14, and determines the position of the hand 20 relative to any of the control inputs 14. The determination of hand position is preferably made by using known pattern recognition techniques such as comparing the present hand position indicated by image 32 to a hand position occurring in a prior camera signal having a prior image showing the hand in a different position. Alternately, the hand position could be detected by comparing the present camera image to a previous camera image known to not contain a hand. Another alternative is to use a camera capable of detecting infrared light and then detect a hand as being a different temperature than surrounding objects including the control inputs.

When processor 18 determines that hand 20 is approaching control inputs 14, processor 18 synthesizes or generates a processed camera image having a second perspective view that is distinct from the first perspective view. The second perspective view is output by processor 18 to a display 22 that is arranged to be readily observed by the operator without distracting the operator's attention from the upcoming roadway. As shown in Fig. 1, the second perspective is shown on display 22 that is part of an instrument panel 24, but may alternately be show on a heads-up type display that is projected onto a windshield 11.

The processed camera image having the second perspective view provides a view to the operator that is useful for assisting the operator with locating a specific control input without averting the operator's attention from the upcoming roadway. The second perspective view may be a view that would correspond to a view seen by operator 12 if the operator were to lean over or crane his neck to get a better view of control inputs 14. Preferably, the second perspective view corresponds to a view that would be available to a camera that was positioned near the operator's forearm or wrist, substantially close to hand 20. This virtual camera would provide a second perspective view that maintained a position substantially fixed relative to the hand 20 and provide an image of the hand. For example, if the fingers of the hand were outstretched, the processed camera image would show a hand from the second perspective view with fingers outstretched. Similarly, if only the index finger was outstretched and the remaining fingers were curled to form a partial fist, the processed camera image would show such a hand. This second perspective has also been described as a first-person perspective.

Fig. 3 is a detailed view of instrument panel 24 wherein display 22 is showing an example of a processed camera signal having a second perspective view. Processor 18 preferably synthesizes or generates the processed camera signal having the second perspective view from the camera signal having the first perspective view by geometrically mapping each pixel of the camera signal a corresponding pixel in the processed camera image. United States Patent Number 7,307,655 shows an exemplary method for changing the perspective view of an image. This process of generating and displaying a processed camera signal is repeated periodically such that as the hand moves or changes position, the display is appropriately updated. Alternately, camera 16 may be configured to perform the perspective modification. For such a configuration, processor 18 would analyze the camera signal to determine a hand position.

In accordance with the geometric mapping described above, as hand 20 moves closer to control input 14, the display would be updated so that it would appear that the virtual camera mounted to the operator forearm or wrist was getting closer to a control input. Fig. 3 depicts an outstretched index finger that is close to making contact with a control input such as push button 26. If the hand 20 were to back away from the position indicated in Fig. 3, then the processed camera image would also appear to back away or zoom out from the previous position. Similarly, if hand 20 were to move laterally or vertically, the display would be updated accordingly to correspond to the new hand position relative to the controls.

The portion of the second perspective view showing the control inputs 14 may be the result of the geometric mapping process described above, or may be a view synthesized from images stored in processor 18. This use of stored images may provide a higher resolution or more useful depiction of control inputs 14. The second perspective view of hand 20 may be based on the first perspective view from camera 14, but could alternately be an outline or caricature of hand 20. By overlaying the hand image over stored images or caricatures of the input controls, it may be possible to provide a more intuitive second perspective view to operator 12.

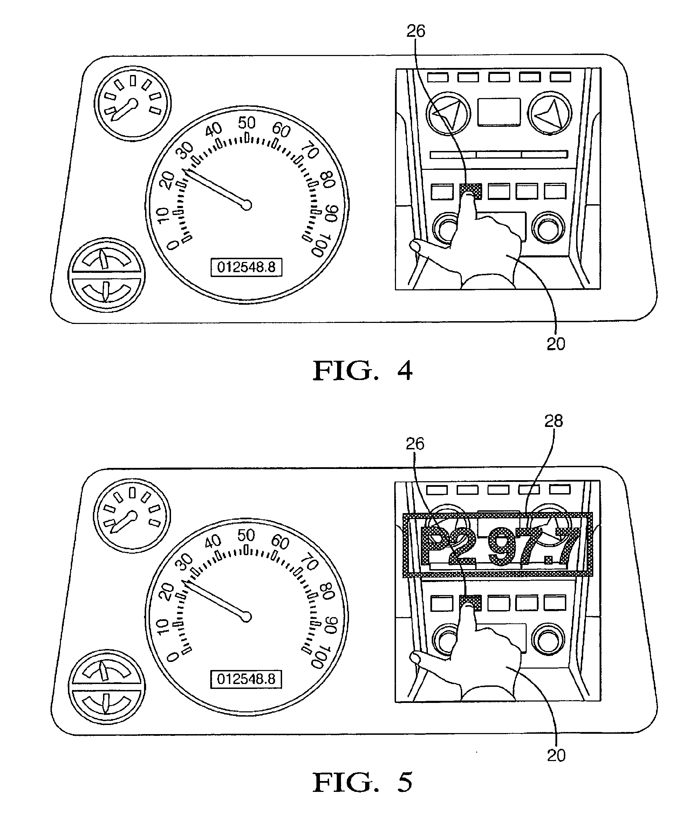

In another embodiment, processor 18 is also electrically coupled to control inputs 14 that may be configured to detect that a control input is being touched. As used herein, being touched is a level of contact that does not impart enough force to the control input to indicate that the operator is trying to physically move or actuate the control input. Capacitive sensing and infrared sensing are sensing methods that are used to detect that an object such as a control input is being touched. When control inputs 14 output an indication that the control input is being touched, processor 18 receives the indication that the control input is being touched. If a control input such as push button 26 is indicating that it is being touched by hand 20, then the processed camera signal showing the second perspective view may be modified to include in the processed camera signal an indication that the control input is being touched. As illustrated in Fig. 4, when push button 26 is touched, the region indicating pushbutton 26 is highlighted. Highlighting may, for example, be displaying push button 26 as being a contrasting color such as red. Such a feature would allow the operator to verify that the control input that the operator is seeking is being touched before actuating the control input to control a device. Fig. 4 illustrates in black and white how push button 26 being touched by a hand 20 would be highlighted as compared to Fig. 3 illustrating when the control input is not being touched.

In another embodiment, processor 18 is electrically coupled to control inputs 14 so that processor 18 receives an indication that a control input is being actuated. If an indication of an actuation of a control input is received by processor 18, then the processed camera signal may be modified to include in the processed camera signal an indication that the control input is being actuated. Such a feature would allow the operator to verify that the control input that the operator is seeking has been properly actuated to control input to control a device. For example, if a control input were being actuated, then the display could show that control input highlighted in a contrasting color, green for example. Preferably, the indication that the control input had been actuated may include a text message corresponding to the control input. Fig. 5 illustrates an example of how a control input being actuated by hand 20 would be confirmed with a text message 28 as compared to Figs. 3 and 4 wherein the control input is not being actuated. By confirming actuation with text message 28, the operator can further distinguish an actuation confirmation illustrated in Fig. 5 from the being touched confirmation described above and illustrated in Fig. 4.

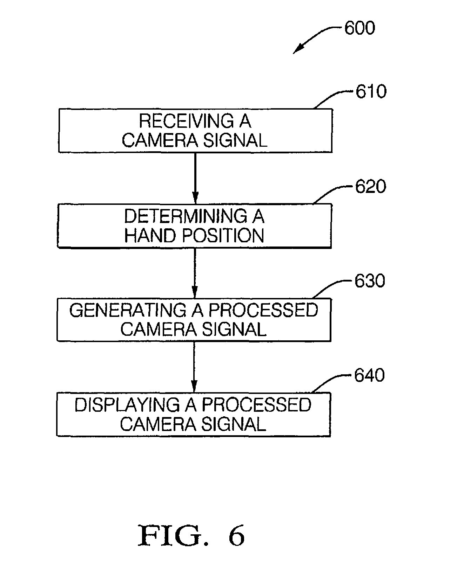

Fig. 6 is a flow chart 600 of a method of operating the automobile in Fig. 1. Step 610 is directed to receiving a camera signal. Step 610 may also include arranging a camera to have a first perspective view of a control input and outputting a camera signal by the camera. Receiving of the camera signal would preferably be performed by a processor adapted to receive such a signal. In accordance with previously described embodiments, the camera signal would be output by camera 16 and received by processor 18. The processor would also preferably perform step 620, determining a hand position. Determining a hand position may be performed using a variety of known image processing techniques that can detect the presence of a hand using pattern recognition techniques, or by comparing a sequence of camera signals to detect that an object such as a hand is moving in the camera's field of view. The processor would also preferably perform step 630, generating a processed camera signal. The processed camera signal has a second perspective view distinct from the first perspective view. The second perspective view preferably corresponds to that of a virtual camera having a fixed position relative to an automobile operators forearm or wrist, thus appearing to be substantially fixed relative to the hand 20. Step 640, displaying a processed camera signal is preferably performed by a display arranged to be readily viewed by the operator. By providing such a display, the second perspective view is useful to assist the operator with locating the control input is such a way as to avoid having the operator distracted from the upcoming roadway.

Thus a system and method is provided that supplies an operator with a unique perspective view of the operator's hand approaching a device control input. As the operator's hand moves towards a control input, a display conveniently shows a perspective view that would otherwise require the operator to crane his or her neck towards the control input. Such a system and method allows the operator to maintain a proper posture to safely operate the vehicle and minimizes distraction caused by operating various devices on the vehicle. Furthermore, the system provides the operator with confirmation that the operator's hand or finger is touching the desired control input prior to the operator actuating the control input, and provides a confirmation of which control input was actuated by the operator. Such a system will be particularly useful when operating a vehicle in conditions that require a high degree of attentiveness on the part of the operator, such as during a snowstorm when the roadway is ice covered, or at night when detecting obstacles on the upcoming roadway may be difficult.

## Claims

1. A vehicle operating system comprising:
a device in a vehicle having a control input (14) for an operator (12) to control the device;
a camera (16) arranged to have a first perspective view of the control input (14) and configured to output a camera signal corresponding to the first perspective view;
a display (22) arranged to be readily observed by the operator; and
a processor (18) configured to receive the camera signal, determine a hand position of a hand approaching the control input based on the camera signal, and output a processed camera signal to the display (22) for assisting the operator (12) with locating the control input (14), **characterised in that** said processed camera signal provides a second perspective view corresponding to a virtual camera arranged to have a view that is substantially fixed relative to the hand (20).

2. The system in accordance with claim 1, wherein said second perspective view corresponds to a virtual camera coupled substantially close to the hand (20).

3. The system in accordance with claim 1, said processor (18) configured to determine the hand (20) position from the camera signal by comparing the camera signal to a prior camera signal.

4. A method of operating a vehicle comprising a device in the vehicle having a control input (14) for an operator (12) to control the device, said method comprising the steps of:
receiving a camera (16) signal having a first perspective view of the control input (14);
determining a hand position of a hand approaching the control input (14) based on the camera (16) signal; **characterized by**
generating a processed camera (16) signal having a second perspective view that is substantially fixed relative to the hand (20); and
displaying a processed camera (16) signal to assist the operator (12) with locating the control input (14).

5. The method in accordance with claim 4, wherein the second perspective view corresponds to a virtual camera coupled substantially close to the hand.

6. The method in accordance with claim 4, wherein the step of determining a hand (20) position includes comparing the camera (16) signal to a prior camera (16) signal.

7. The method in accordance with claim 4, wherein said control input (14) is configured to output an indication that the control input is being touched, and the step of generating a processed camera signal includes providing an indication that the control input (14) is being touched.

8. The method in accordance with claim 4, wherein said control input (14) is configured to output an indication that the control input (14) is being actuated, and the step of generating a processed camera (16) signal includes providing an indication that the control input (14) is being actuated.

## Patentansprüche

1. Ein Fahrzeug-Betriebssystem, das aufweist:
eine Vorrichtung in einem Fahrzeug mit einer Steuerungseingabe (14) für eine Bedienperson (12), um die Vorrichtung zu steuern;
eine Kamera (16), die ausgebildet ist, eine erste perspektivische Ansicht der Steuerungseingabe (14) zu haben, und konfiguriert ist, ein Kamerasignal auszugeben, das der ersten perspektivischen Ansicht entspricht;
eine Anzeige (22), die ausgebildet ist, von der Bedienperson einfach betrachtet zu werden; und
einen Prozessor (18), der konfiguriert ist, das Kamerasignal zu empfangen, eine Handposition einer Hand zu bestimmen, die sich der Steuerungseingabe nähert, basierend auf dem Kamerasignal, und ein verarbeitetes Kamerasignal an die Anzeige (22) auszugeben zur Unterstützung der Bedienperson (12) bei einem Lokalisieren der Steuerungseingabe (14), **dadurch gekennzeichnet, dass** das verarbeitete Kamerasignal eine zweite perspektivische Ansicht liefert, die einer virtuellen Kamera entspricht, die ausgebildet ist, eine Ansicht zu haben, die im Wesentlichen fest ist relativ zu der Hand (20).

2. Das System gemäß Anspruch 1, wobei die zweite perspektivische Ansicht einer virtuellen Kamera entspricht, die im Wesentlichen nahe der Hand (20) gekoppelt ist.

3. Das System gemäß Anspruch 1, wobei der Prozessor (18) konfiguriert ist, die Position der Hand (20) aus dem Kamerasignal zu bestimmen durch Vergleichen des Kamerasignals mit einem früheren Kamerasignal.

4. Ein Verfahren zum Betrieb eines Fahrzeugs, das eine Vorrichtung in dem Fahrzeug aufweist mit einer Steuerungseingabe (14) für eine Bedienperson (12), um die Vorrichtung zu steuern, wobei das Verfahren die Schritte aufweist:
Empfangen eines Signals einer Kamera (16) mit einer ersten perspektivischen Ansicht der Steuerungseingabe (14);
Bestimmen einer Handposition einer Hand, die sich der Steuerungseingabe (14) nähert, basierend auf dem Signal der Kamera (16); **gekennzeichnet durch**
Erzeugen eines verarbeiteten Signals der Kamera (16) mit einer zweiten perspektivischen Ansicht, die im Wesentlichen fest ist relativ zu der Hand (20); und
Anzeigen eines verarbeiteten Signals der Kamera (16), um die Bedienperson (12) bei einem Lokalisieren der Steuerungseingabe (14) zu unterstützen.

5. Das Verfahren gemäß Anspruch 4, wobei die zweite perspektivische Ansicht einer virtuellen Kamera entspricht, die im Wesentlichen nahe der Hand gekoppelt ist.

6. Das Verfahren gemäß Anspruch 4, wobei der Schritt des Bestimmens einer Position der Hand (20) umfasst ein Vergleichen des Signals der Kamera (16) mit einem früheren Signal der Kamera (16).

7. Das Verfahren gemäß Anspruch 4, wobei die Steuerungseingabe (14) konfiguriert ist, eine Anzeige auszugeben, dass die Steuerungseingabe berührt wird, und der Schritt des Erzeugens eines verarbeiteten Kamerasignals umfasst ein Vorsehen einer Anzeige, dass die Steuerungseingabe (14) berührt wird.

8. Das Verfahren gemäß Anspruch 4, wobei die Steuerungseingabe (14) konfiguriert ist, eine Anzeige auszugeben, dass die Steuerungseingabe (14) betätigt wird, und der Schritt des Erzeugens eines verarbeiteten Signals der Kamera (16) umfasst ein Vorsehen einer Anzeige, dass die Steuerungseingabe (14) betätigt wird.

## Revendications

1. Système pour le fonctionnement d'un véhicule, comprenant :
un dispositif dans un véhicule ayant une entrée de commande (14) pour qu'un opérateur (12) commande le dispositif ;
une caméra (16) agencée pour avoir une première vue en perspective de l'entrée de commande (14) et configurée pour délivrer un signal de caméra correspondant à la première vue en perspective ;
un affichage (22) agencé pour être aisément observé par l'opérateur ; et un processeur (18) configuré pour recevoir le signal de caméra, pour déterminer la position d'une main s'approchant de l'entrée de commande en se basant sur le signal de caméra, et délivrer un signal de caméra traité à l'affichage (22) pour aider l'opérateur (12) à localiser l'entrée de commande (14), **caractérisé en ce que** ledit signal de caméra traité fournit une seconde vue en perspective correspondant à une caméra virtuelle agencée pour avoir une vue qui est sensiblement fixe par rapport à la main (20).

2. Système selon la revendication 1, dans lequel ladite seconde vue en perspective correspond à une caméra virtuelle couplée sensiblement proche de la main (20).

3. Système selon la revendication 1, dans lequel ledit processeur (18) est configuré pour déterminer la position de la main (20) à partir du signal de caméra en comparant le signal de caméra à un signal de caméra antérieur.

4. Procédé pour le fonctionnement d'un véhicule comprenant un dispositif dans le véhicule ayant une entrée de commande (14) pour qu'un opérateur (12) commande le dispositif, ledit procédé comprenant les étapes consistant à :
recevoir un signal de caméra (16) ayant une première vue en perspective de l'entrée de commande (14) ;
déterminer la position d'une main qui s'approche de l'entrée de commande (14) en se basant sur le signal de caméra (16) ; **caractérisé par** les étapes consistant à :
générer un signal de caméra traité (16) ayant une seconde vue en perspective qui est sensiblement fixe par rapport à la main (20) ; et
afficher un signal de caméra traité (16) pour aider l'opérateur (12) à localiser l'entrée de commande (14).

5. Procédé selon la revendication 4, dans lequel la seconde vue en perspective correspond à une caméra virtuelle couplée sensiblement proche de la main.

6. Procédé selon la revendication 4, dans lequel l'étape de détermination d'une position de la main (20) inclut de comparer le signal de caméra (16) à un signal de caméra (16) antérieur.

7. Procédé selon la revendication 4, dans lequel ladite entrée de commande (14) est configurée pour délivrer une indication que l'entrée de commande est touchée, et l'étape de génération d'un signal de caméra traité inclut de fournir une indication que l'entrée de commande (14) est touchée.

8. Procédé selon la revendication 4, dans lequel ladite entrée de commande (14) est configuré pour délivrer une indication que l'entrée de commande (14) est actionnée, et l'étape de génération d'un signal de caméra traité (16) inclut de fournir une indication que l'entrée de commande (14) est actionnée.
